# EUROPÄISCHE PATENTSCHRIFT

(11) **EP 2 719 128 B1**
(45) Veröffentlichungstag und Bekanntmachung des Hinweises auf die Patenterteilung: **20.05.2015**
(21) Anmeldenummer: 12726584.1
(22) Anmeldetag: 31.05.2012
(51) Int. Cl.: H04L 12/403, B60R 16/023, H04J 3/16

(54) **VERFAHREN ZUM BETRIEB EINES BUSSYSTEMS ZUR KOMMUNIKATION MIT MEHREREN KOMMUNIKATIONSTEILNEHMERN UND KRAFTFAHRZEUG**
METHOD FOR OPERATING A BUS SYSTEM FOR COMMUNICATION WITH A PLURALITY OF COMMUNICATION NODES, AND MOTOR VEHICLE
PROCÉDÉ DE FONCTIONNEMENT D'UN SYSTÈME DE BUS POUR LA COMMUNICATION AVEC PLUSIEURS ABONNÉS ET VÉHICULE À MOTEUR

(30) Priorität: 10.06.2011 DE 102011103938
(43) Veröffentlichungstag der Anmeldung: 16.04.2014
(73) Patentinhaber: Audi AG, 85045 Ingolstadt (DE)
(72) Erfinder: GÜRTNER, Fred, 85077 Manching (DE)
(74) Vertreter: Brandt, Kai
(86) Internationale Anmeldenummer: PCT/EP2012/002296
(87) Internationale Veröffentlichungsnummer: WO 2012/167880

(56) Entgegenhaltungen:
- DE-A1- 2 262 933
- DE-A1-102005 033 830
- US-A1- 2009 282 164

## Beschreibung

Die Erfindung betrifft ein Verfahren zum Betrieb eines Bussystems zur Kommunikation mit mehreren Kommunikationsteilnehmern, insbesondere in einem Land- und/oder Luftfahrzeug, wobei in einem statischen, zyklisch wiederkehrenden Zeitfenster fester Länge jedem Kommunikationsteilnehmer ein Zeitschlitz zur Übertragung einer Nutzinformation einer während dem Betrieb des Bussystems festen, wenigstens einmalig festlegbaren Bytezahl zugeordnet wird.

Bussysteme, die die Kommunikation zwischen verschiedenen Kommunikationsteilnehmern erlauben und organisieren, sind bekannt und werden häufig auch in Land- und/oder Luftfahrzeugen, beispielsweise Kraftfahrzeugen, eingesetzt. Damit eine dezentrale Kommunikation über ein Bussystem überhaupt möglich ist, sind verschiedene Standards bekannt, unter welchen ein Bussystem betrieben werden kann, beispielsweise CAN-Busse oder FlexRay-Busse. US 2009/282164 zeigt das Präambel des Anspruchs 1.

Der FlexRay-Bus wurde gezielt für Automobile entwickelt und ist ein serielles, deterministisches und fehlertolerantes Feldbussystem. Um einen Knoten des FlexRay-Bussystems zu etablieren, beispielsweise ein Steuergerät in einem Kraftfahrzeug an den FlexRay-Bus anzuschließen, werden als Komponenten ein "Bus Transceiver" und ein "Communication Controller" benötigt, wobei der "Bus Transceiver" die Schnittstelle zur Datenleitung darstellt und der "Communication Controller", beispielsweise ein Mikroprozessor, das Busprotokoll für den konkreten Knoten realisiert. Das Busprotokoll regelt, wie ein Netzwerk startet, wie die globale Zeit etabliert und im Sinne einer Synchronisierung aufrechterhalten wird und welche Knoten, insbesondere welche Steuergeräte, zu welchem Zeitpunkt senden dürften. Der "Communication Controller" betrachtet also die empfangenen Signale anderer Kommunikationsteilnehmer und leitet den Zeitpunkt ab, zu dem der eigene Knoten senden darf und bereitet entsprechende, zu sendende Datenpakete vor.

Dabei zeichnet sich das FlexRay-Protokoll dadurch aus, dass für jeden Zyklus ein statisches und ein dynamisches Zeitfenster vorgesehen sind. Im statischen Segment wird jedem Knoten, insbesondere jedem Steuergerät, ein Zeitschlitz (Slot) zugeordnet, in dem er Nachrichten senden kann. Jeder Knoten erhält dabei einen Zeitschlitz fester Länge zugeteilt, letztlich also fester Bytezahl für die übertragbaren Nutzdaten, wobei die entsprechende Bytezahl vor Beginn des Betriebs des Bussystems festgelegt wird. Der Knoten darf die Bytezahl und somit die zeitliche Länge seines Zeitschlitzes nicht überschreiten. Wenn die zu versendende Nachricht zu lang ist, muss der nächste Zyklus oder das dynamische Zeitfenster genutzt werden, um die Nachricht fortzusetzen. Zweck des statischen Zeitfensters ist es, einen deterministischen Teil des Busprotokolls darzustellen, so dass wichtige Nachrichten, beispielsweise bezüglich eines Lenksystems oder eines Bremssystems, innerhalb einer bekannten Zeit übertragen werden können.

Das dynamische Zeitfenster, welches in seiner Gesamtlänge fest ist, kann von einem Knoten, insbesondere von einem Steuergerät, genutzt werden, wenn längere oder weitere Nachrichten gesendet werden sollen und die Bytezahl seines statischen Slots nicht ausreichend ist oder dieser für Nachrichten höherer Priorität verwendet wird. Die Zeitschlitze (Minislot) im dynamischen Zeitfenster können dabei einfach verstreichen, wenn ein Steuergrät keine Nachricht absetzen möchte. Sobald ein Knoten eine Nachricht senden möchte, verschiebt sich der Zeitpunkt, zu dem der nächste Knoten senden kann, entsprechend der Länge der Nachricht nach hinten, so dass es vorkommen kann, das weitere Knoten nicht mehr senden können und das gesamte dynamische Zeitfenster aufgebraucht wird. Die Minislots des dynamischen Zeitfensters werden mithin nach gewissen Prioritäten vergeben.

In einem Zyklus kann dabei noch ein weiteres Zeitfenster, die "Network Idle Time" (NIT) vorgesehen sein, die dem Knoten ermöglichen soll, wieder eine exakte Synchronisierung vorzunehmen.

Die Nachrichten oder Datenpakete, die über ein Bussystem, beispielsweise ein Fleyray-Bussystem verschickt werden, sind meist so aufgebaut, dass sie einen Header, die eigentlichen Nutzdaten ("Payload") und einen Trailer umfassen. Ferner kann der nicht für Nutzdaten nutzbare Zeitabschnitt jedes Zeitschlitzes eine "Channel Idle Time" (CIT) und einen "Channel Idle Delimite" (CID) umfassen.

Bei Bussystemen mit einem statischen Zeitfenster (oft auch statischer Schedulebereich), beispielsweise einem FlexRay-Bus, ist mithin die Bytezahl eines Slots (Zeitschlitzes) des statischen Zeitfensters für alle darin enthaltenen Zeitschlitze festlegbar und bestimmt somit auch die Länge des statischen Zeitfensters. Dabei können beispielsweise Bytezahlen von 0 bis 254 Byte gewählt werden. Dies ist jedoch dahingehend nachteilhaft, dass letztlich eine Verschwendung von Bandbreite vorliegt. Denn wird eine hohe Bytezahl gewählt (breite Slotauslegung), können Teilnehmer mit einem geringen Kommunikationsbedarf die ihnen zugewiesene hohe Bandbreite in ihrem Zeitschlitz nicht nutzen. Werden im Gegenzug kleine Bytezahlen gewählt (schmale Slotauslegung), so müssen Kommunikationsteilnehmer mit einem hohen Kommunikationsbedarf mehrere Zeitschlitze verwenden und haben dadurch hohe Verluste aufgrund der Mehrfachverwendung der nicht für Nutzdaten geeigneten Zeitabschnitte jedes Zeitschlitzes, insbesondere aufgrund der Mehrfachverwendung des Headers, des Trailers, der CIT und der CID.

Der Erfindung liegt daher die Aufgabe zugrunde, ein Verfahren anzugeben, bei dem eine effektive Benutzung eines statischen Zeitfensters (Schedulebereich) in einem Bussystem, insbesondere einem FlexRay-Bussystem, möglich ist.

Zur Lösung dieser Aufgabe ist bei einem Verfahren gemäss dem Anspruch 1 vorgesehen.

Es wird vorgeschlagen, dass nicht nur eine einzige, feste Bytezahl vor Betrieb des Bussystems für das statische Zeitfenster vorgesehen ist, sondern dass es wenigstens zwei Unterzeitfenster gibt, in denen Zeitschlitze bestimmter Kommunikationsteilnehmer zusammengefasst sind. Für jedes dieser Unterfenster lässt sich nun unabhängig eine Bytezahl für die Nutzdaten festlegen, das bedeutet, die den Unterzeitfenstern zugeordneten Bytezahlen können unterschiedlich sein. Die Zahl der Zeitschlitze in einem Unterzeitfenster und die darin konkret verwendete Bytezahl kann architekturabhängig gewählt werden, das bedeutet, es ist eine Abstimmung auf die speziellen Anforderungen des konkret realisierten Bussystems, beispielsweise in einem Land- und/oder Luftfahrzeug, möglich. Insbesondere wäre hier an eine Erweiterung des bekannten FlexRay-Standards denkbar, so dass auch dort die erfindungsgemäß angedachten, verschiedenen, festlegbaren Slotbreiten (Bytezahlen) realisiert werden können. Bevorzugt wird das erfindungsgemäße Verfahren also zur Erweiterung des Busprotokolls eines FlexRay-Bussystems eingesetzt.

Dabei können in einer zweckmäßigen Ausgestaltung zwei oder drei Unterzeitfenster verwendet werden. Die Verwendung einer größeren Zahl an Unterzeitfenstern als drei kann zu Problemen dahingehend führen, dass der Rechenaufwand für jeden Kommunikationsteilnehmer deutlich ansteigt, je mehr unterschiedliche Bytezahlen erforderlich sind. Diese müssten nämlich in jedem Kommunikationsteilnehmer, insbesondere jedem Steuergerät, vorliegen, damit dieser nachvollziehen kann, wann der eigene Zeitschlitz erreicht ist. Es hat sich nun gezeigt, dass die Verwendung von zwei der drei Unterzeitfenster sich bezüglich des Rechenaufwands günstig und aufwandsarm realisieren lässt, ohne dass das Busprotokoll diesbezüglich eine zu hohe Komplexität erhält.

In einer konkreten Ausgestaltung kann dabei vorgesehen sein, dass ein Unterzeitfenster für Kommunikationsteilnehmer mit einem großen Kommunikationsbedarf, insbesondere mit einer Bytezahl größer als 60 Byte, ein Unterzeitfenster für Kommunikationsteilnehmer mit einem mittleren Kommunikationsbedarf, insbesondere mit einer Bytezahl zwischen 20 und 70 Byte, und ein Unterzeitfenster für Kommunikationsteilnehmer mit einem kleinen Kommunikationsbedarf, insbesondere mit einer Bytezahl kleiner als 24 Byte, festgelegt wird. Beispielsweise ist es also denkbar, die Kommunikationsteilnehmer nach ihrem Kommunikationsbedarf in verschiedene Gruppen aufzuteilen, die dann den verschiedenen Unterzeitfenstern zugeordnet werden. Denkbar ist es natürlich auch, zwei verschiedene statische Unterzeitfenster vorzusehen, nämlich ein Unterzeitfenster für Kommunikationsteilnehmer mit einem großen Kommunikationsbedarf, insbesondere mit einer Bytezahl größer als 60 Byte, und ein Unterzeitfenster für Kommunikationsteilnehmer mit einem geringen Kommunikationsbedarf, insbesondere mit einer Bytezahl kleiner als 60 Byte, vorzusehen. Im Beispiel eines Kraftfahrzeugs sind Teilnehmer mit einem großen Kommunikationsbedarf beispielsweise die Steuergeräte des Motors, des Getriebes, des ESP-Systems und des Bremssystems, Teilnehmer mit einem mittleren Kommunikationsbedarf sind beispielsweise Airbagsteuergeräte oder Steuergeräte eines Kommunikationsdisplays, und Teilnehmer mit einem kleinen Kommunikationsbedarf sind beispielsweise Steuergeräte eines Lenkwinkelsensors, einer Anhängerkupplung und Türsteuergeräte.

Nachdem es beispielsweise gemäß dem FlexRay-Standard möglich ist, Bytezahlen auf Werte zwischen 0 und 254 Byte festzulegen, kann dies auch beim erfindungsgemäßen Verfahren vorgesehen sein.

Dabei sei an dieser Stelle nochmals hervorgehoben, dass nach der Festlegung der Bytezahlen für die Slotbreite (Zeitschlitzbreite) eines Unterzeitfensters diese während des Betriebs des Bussystems festgelegt sind, mithin statische Zeitabschnitte des Zyklus definieren. Die Bytezahlen des statischen Zeitfensters sind mithin während des Betriebs des Bussystems unveränderbar. Dies steht im Gegensatz zu einem dynamischen Zeitfenster, welches erfindungsgemäß ebenso Teil eines Zyklus sein kann.

So kann vorgesehen sein, dass das statische Zeitfenster Teil eines Kommunikationszyklus ist, der sich aus dem statischen Zeitfenster und einem dynamischen Zeitfenster zusammensetzt, in dem die Größe der einzelnen Zeitschlitze während des Betriebs des Bussystems wenigstens teilweise dynamisch angepasst wird. Ein solches dynamisches Zeitfenster kann genutzt werden, um weitere, größere oder zusätzliche Nutzdaten zu übertragen.

Wie bereits eindeutig dargelegt, besteht jeder Zeitschlitz üblicherweise nicht nur aus einem für Nutzdaten nutzbaren Zeitabschnitt, sondern umfasst auch einen nicht für Nutzdaten nutzbaren Zeitabschnitt, wobei auch im erfindungsgemäßen Verfahren ein solcher nicht für Nutzdaten nutzbarer Zeitabschnitt des Zeitschlitzes vorgesehen sein kann, der insbesondere durch einen Header und/oder einen Trailer und/oder eine Channel-Idle-Zeit (CIT) und einen Channel-Idle-Delimiter (CID) genutzt wird. Dieser zusätzliche Zeitabschnitt wird üblicherweise durch das verwendete Busprotokoll definiert.

Neben dem Verfahren betrifft die vorliegende Erfindung auch ein Kraftfahrzeug, umfassend ein Bussystem mit mehreren Kommunikationsteilnehmern, insbesondere Steuergeräten, welches zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, welches mithin das Erreichen der bereits genannten Vorteile ermöglicht. Auch in sonstigen Land- und Luftfahrzeugen ist das nach dem erfindungsgemäßen Verfahren betriebene Bussystem hervorragend einsetzbar, wobei insbesondere ein Bussystem nach dem FlexRay-Standard verwendet werden kann.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs, und
- Fig. 2: einen Kommunikationszyklus im erfindungsgemäßen Verfahren.

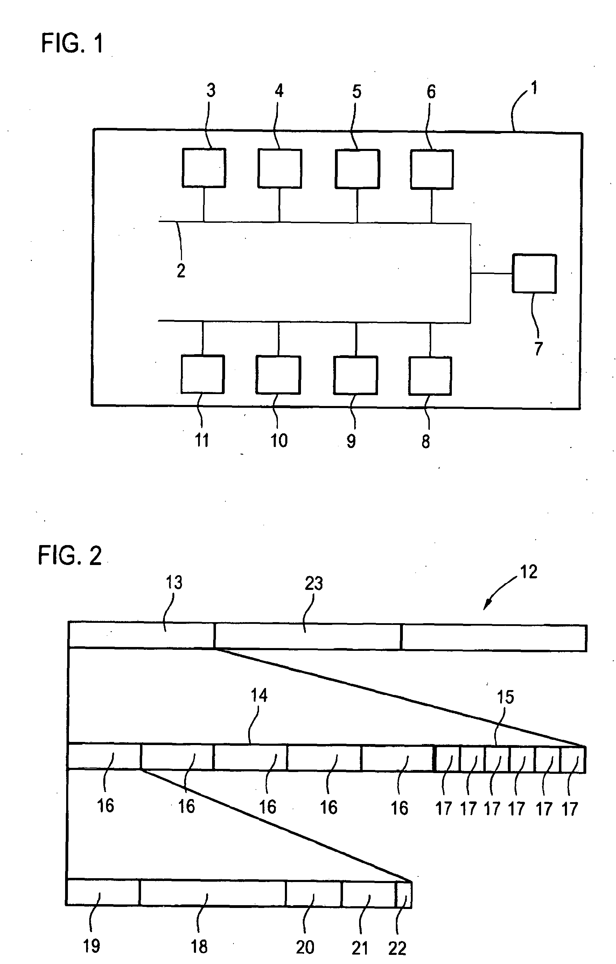

Figur 1 zeigt eine Prinzipskizze eines Kraftfahrzeugs 1. Es umfasst ein Bussystem mit einer Datenleitung 2, an das mehrere Kommunikationsteilnehmer in Form von Steuergeräten angeschlossen sind, von denen hier vorliegend lediglich beispielhaft ein Motorsteuergerät 3, ein Getriebesteuergerät 4, ein ESP-Steuergerät 5, ein Bremsensteuergerät 6, ein Airbagsteuergerät 7, ein Kombinationsdisplay-Steuergerät 8, ein Lenkwinkelsteuergerät 9, ein Anhängerkupplungssteuergerät 10 und ein Türsteuergerät 11 gezeigt sind. Selbstverständlich sind auch noch weitere Steuergeräte vorgesehen, die hier nicht näher dargestellt sind.

Das Bussystem ist nun vorliegend gemäß des Verfahrens so konfigurierbar, dass der Kommunikationszyklus, der hier ein statisches Zeitfenster und ein dynamisches Zeitfenster umfasst, bezüglich des statischen Zeitfensters erlaubt, zwei oder drei Unterzeitfenster zu definieren, deren einzelnen Kommunikationsteilnehmern zugeordnete Zeitschlitze eine festgelegte Länge der Nutzdaten (payload), also eine vor Betrieb des Bussystems festlegbare unterzeitfensterspezifische Bytezahl zwischen 0 und 254 Byte aufweisen.

Dies sei mit Hilfe der Fig. 2 in einem Beispiel näher erläutert, das vorliegend aufgrund der besseren Darstellbarkeit nur elf Kommunikationsteilnehmer betrifft; weitere konkretere Beispiele werden im Folgenden noch dargelegt werden. Wie bereits erwähnt, umfasst ein Kommunikationszyklus 12 vorliegend ein statisches Zeitfenster 13 mit Zeitschlitzen (Slots) einer während des Betriebs des Bussystems unabänderlichen Slotbreite, also Bytezahl. Ferner ist ein dynamisches Zeitfenster 23 vorgesehen, innerhalb dessen die Größe eines Zeitschlitzes dynamisch angepasst werden kann. Solche dynamischen Zeitfenster sind grundsätzlich bekannt und sollen hier nicht näher dargelegt werden.

Aus Fig. 2 ist ferner näher ersichtlich, dass das statische Zeitfenster 13 in zwei Unterzeitfenster 14, 15 aufgeteilt ist, die zusammenhängend ausgebildet sind. Dabei weist im dargestellten Ausführungsbeispiel das erste Unterzeitfenster 14 fünf Zeitschlitze 16 einer großen Bytezahl, beispielsweise 100 Byte, auf. Diese große Bytezahl der ersten Zeitschlitze 16 wurde vor Betrieb des Bussystems festgelegt, ebenso wie die Zahl der Kommunikationsteilnehmer und die Kommunikationsteilnehmer welchen die Zeitschlitze 16 zugeordnet sind.

Entsprechend umfasst das zweite Unterzeitfenster 15 sechs aufeinanderfolgende Zeitschlitze 17 einer vor Betrieb des Bussystems festgelegten kleineren Bytezahl, beispielsweise 40 Byte, die wiederum festen Kommunikationsteilnehmern mit einem kleineren Kommunikationsbedarf zugeordnet sind. Ein einzelnes Steuergerät als Kommunikationsteilnehmer kann, nachdem nur eine geringe Zahl von Unterzeitfenstern gegeben ist, weiterhin aufwandsarm bestimmen, wann sein eigener Zeitschlitz 16 beziehungsweise 17 beginnt, während aber eine größere Flexibilität und Anpassbarkeit an die konkrete Architektur des Bussystems gegeben wird, nachdem Teilnehmer mit einem großen Kommunikationsbedarf einen Zeitschlitz in dem ersten Unterzeitfenster 14 erhalten können, Teilnehmer mit einem kleinen Kommunikationsbedarf einen Zeitschlitz 17 in dem zweiten Unterzeitfenster 15.

Fig. 2 zeigt zudem auch schematisch den Aufbau eines Zeitschlitzes 16 (beziehungsweise 17 analog) an sich. Ersichtlich ist neben einem für die Nutzdaten selbst vorgesehenen Zeitabschnitt 18 zunächst noch ein Header 19 vorgesehen, der unter anderem Informationen wie die Länge der tatsächlich enthaltenen Nutzdaten, verschiedene Indikatoren und dergleichen enthält. Die Nutzdaten werden gefolgt von einem Trailer 20, der beispielsweise Prüfsummen enthalten kann. Nach dem Trailer 20 folgt eine Channel-Idle-Zeit (CIT) 21. Diese wird abgeschlossen durch den Channel-Idle-Delimiter 22.

Ersichtlich ermöglicht es das Verfahren, zwei oder drei Unterzeitfenster 14, 15 mit unterschiedlichen, aber statischen, also während dem Betrieb des Bussystems festgelegten Bytezahlen als zugelassene Nutzdatenmenge zu definieren, wobei die Unterzeitfenster 14, 15 während des Betriebs einen statischen Teil des Kommunikationszyklus 12 bilden und wie bekannt zyklisch wiederholt werden.

Zum Abschluss seien noch zwei konkrete Umsetzungsmöglichkeiten bei einem Kommunikationszyklus von 5 Millisekunden genannt, wobei das statische Zeitfenster 3 Millisekunden lang ist, das dynamische Zeitfenster 2 Millisekunden. Bei einer Aufteilung in drei verschiedene statische Unterzeitfenster ist es möglich, folgende Unterzeitfenster zu verwenden:
a) Ein erstes Unterzeitfenster für Kommunikationsteilnehmer mit einem hohen Kommunikationsaufwand, dessen Länge 960 µs beträgt. Dieses weist 8 Zeitschlitze auf, ist also für 8 Kommunikationsteilnehmer geeignet. Die Dauer eines Zeitschlitzes (Slotbreite) beträgt 120µs, für Nutzdaten werden davon 98 µs genutzt (es lassen sich mithin 98 Byte pro Zeitschlitz als Nutzdaten versenden). Als nicht nutzbare Bandbreite bleiben 22 µs pro Zeitschlitz (Header, Trailer, CIT, CID).
b) Ein zweites Unterzeitfenster für Kommunikationsteilnehmer mit einem mittleren Kommunikationsaufwand, das 1040 µs lang ist. Hier sind 13 Zeitschlitze für 13 Kommunikationsteilnehmer vorgesehen, wobei die Länge eines Zeitschlitzes jedoch nur 80 µs beträgt. Davon werden, nachdem wiederum 22 µs nicht nutzbare Bandbreite vorliegen, 58 µs für Nutzdaten benutzt, welche mithin bis zu 58 Byte lang sein können.
c) Ein drittes Unterzeitfenster für Kommunikationsteilnehmer mit geringem Kommunikationsbedarf, vorliegend 1000 µs lang. Dieses Unterzeitfenster weist 25 Zeitschlitze auf, die mithin 25 verschiedenen Kommunikationsteilnehmern zugeordnet sind. Die Slotbreite, also die Länge eines Zeitschlitzes beträgt 40 µs, wobei wiederum 22 µs als nicht nutzbare Bandbreite vorliegen und für Nutzdaten 18 µs, mithin eine Bytezahl von 18 Byte zur Verfügung stehen.

Im Ausführungsbeispiel nach Fig. 1 können zu den Kommunikationsteilnehmern mit hohem Kommunikationsaufwand beispielsweise das Motorsteuergerät 3, das Getriebesteuergerät 4, das ESP-Steuergerät 5 und das Bremsensteuergerät 6 gehören. Zu den Teilnehmern mit mittlerem Kommunikationsbedarf zählen das Airbagsteuergerät 7 und das Kombinationsdisplay-Steuergerät 8. Das Lenkwinkelsteuergerät 9, das Anhängerkupplungssteuergerät 10 und das Türsteuergerät 11 zählen zu den Kommunikationsteilnehmern mit geringem Kommunikationsbedarf, ihre Zeitschlitze befinden sich mithin im dritten Unterzeitfenster.

Eine Ausgestaltung mit zwei verschiedenen statischen Unterzeitfenstern könnte beispielsweise folgende Unterzeitfenster enthalten:
a) Ein erstes Unterzeitfenster für Kommunikationsteilnehmer mit einem hohen Kommunikationsbedarf, das 1000 µs lang andauert, wobei 10 Zeitschlitze mit einer Dauer von jeweils 100 µs zur Verfügung stehen. Davon werden für Nutzdaten 84 µs genutzt, so dass 84 Byte pro Zeitschlitz zur Verfügung stehen. Die nicht nutzbare Bandbreite, also der für Header, Trailer, CIT und CID genutzte Zeitabschnitt ist 16 µs pro Zeitschlitz lang.
b) Ein zweites Unterzeitfenster für Kommunikationsteilnehmer mit einem geringen Kommunikationsbedarf, welches 2000 µs lang ist. Die Anzahl der Zeitschlitze, mithin der zugeordneten Kommunikationsteilnehmer, beträgt hier 40 und jeder Zeitschlitz ist 50 µs lang. Hieraus ergeben sich mit der nicht nutzbaren Bandbreite von 16 µs pro Zeitschlitz für die Nutzdaten 34 µs, mithin 34 Byte pro Zeitschlitz.

## Patentansprüche

1. Verfahren zum Betrieb eines Bussystems zur Kommunikation mit mehreren Kommunikationsteilnehmern, insbesondere in einem Land- und/oder Luftfahrzeug, wobei in einem statischen, zyklisch wiederkehrenden Zeitfenster (13) fester Länge jedem Kommunikationsteilnehmer ein Zeitschlitz (16, 17) zur Übertragung einer Nutzinformation einer während dem Betrieb des Bussystems festen, wenigstens einmalig festlegbaren Bytezahl zugeordnet wird,
**dadurch gekennzeichnet,**
**dass** das Zeitfenster (13) wenigstens zwei zusammenhängende Unterzeitfenster (14, 15) aufweist, wobei für alle Zeitschlitze (16, 17) eines Unterzeitfensters (14, 15) dieselbe Bytezahl festgelegt wird und für Zeitschlitze (16, 17) verschiedener Unterzeitfenster (14, 15) unterschiedliche Bytezahlen festgelegt werden.

2. Verfahren nach Anspruch 1,
**dadurch gekennzeichnet,**
**dass** zwei oder drei Unterzeitfenster (14, 15) verwendet werden.

3. Verfahren nach Anspruch 2,
**dadurch gekennzeichnet,**
**dass** ein Unterzeitfenster (14, 15) für Kommunikationsteilnehmer mit einem großen Kommunikationsbedarf, insbesondere mit einer Bytezahl größer als 60 Byte, ein Unterzeitfenster (14, 15) für Kommunikationsteilnehmer mit einem mittleren Kommunikationsbedarf, insbesondere mit einer Bytezahl zwischen 20 und 70 Byte, und ein Unterzeitfenster (14, 15) für Kommunikationsteilnehmer mit einem kleinen Kommunikationsbedarf, insbesondere mit einer Bytezahl kleiner als 24 Byte, festgelegt wird.

4. Verfahren nach einem der vorangehenden Ansprüche,
**dadurch gekennzeichnet,**
**dass** die Bytezahlen auf Werte von 0 bis 254 Byte festgelegt werden.

5. Verfahren nach einem der vorangehenden Ansprüche,
**dadurch gekennzeichnet,**
**dass** das statische Zeitfenster (13) Teil eines Kommunikationszyklus (12) ist, der das statischen Zeitfenster (13) und ein dynamisches Zeitfenster (23) umfasst, in dem die Größe der einzelnen Zeitschlitze während des Betriebs des Bussystems wenigstens teilweise dynamisch angepasst werden.

6. Verfahren nach einem der vorangehenden Ansprüche,
**dadurch gekennzeichnet,**
**dass** jeder Zeitschlitz (16, 17) einen nicht für Nutzdaten nutzbaren Zeitabschnitt umfasst, wobei der Zeitabschnitt insbesondere durch einen Header (19) und/oder einen Trailer (20) und/oder eine Channel-Idle-Zeit (21) und einen Channel-Idle-Delimiter (22) genutzt wird.

7. Kraftfahrzeug (1), umfassend ein Bussystem mit mehreren Kommunikationsteilnehmern, ausgebildet zur Durchführung eines Verfahrens nach einem der vorangehenden Ansprüche.

## Claims

1. Method for operating a bus system for communication with a plurality of communication participants, in particular in a land vehicle and/or aircraft, each communication participant being assigned, in a static, cyclically recurring time window (13) of fixed length, a time slot (16, 17) for transmitting user information having a byte count which is fixed during operation of the bus system and which can be defined at least once, **characterised in that** the time window (13) has at least two coherent sub-time windows (14, 15), the same byte count being defined for all the time slots (16, 17) of one sub-time window (14, 15) and different byte counts being defined for time slots (16, 17) of different sub-time windows (14, 15).

2. Method according to claim 1, **characterised in that** two or three sub-time windows (14, 15) are used.

3. Method according to claim 2, **characterised in that** one sub-time window (14, 15) is defined for communication participants having a large communication requirement, in particular having a byte count of more than 60 bytes, one sub-time window (14, 15) is defined for communication participants having a medium communication requirement, in particular having a byte count of between 20 and 70 bytes, and one sub-time window (14, 15) is defined for communication participants having a low communication requirement, in particular having a byte count of less than 24 bytes.

4. Method according to any of the preceding claims, **characterised in that** the byte counts are defined at values of from 0 to 254 bytes.

5. Method according to any of the preceding claims, **characterised in that** the static time window (13) is part of a communication cycle (12) which includes the static time window (13) and a dynamic time window (23) in which the sizes of the individual time slots are adapted dynamically at least in part during operation of the bus system.

6. Method according to any of the preceding claims, **characterised in that** each time slot (16, 17) includes a time period which cannot be used for user information, the time period being used in particular by a header (19) and/or a trailer (20) and/or a channel idle time (21) and a channel idle delimiter (22).

7. Motor vehicle (1) comprising a bus system having a plurality of communication participants, configured to carry out a method according to any of the preceding claims.

## Revendications

1. Procédé de fonctionnement d'un système de bus pour communiquer avec plusieurs abonnés de communications, en particulier dans un véhicule terrestre et/ou aérien, dans lequel il est affecté à chaque abonné de communications, dans une fenêtre temporelle statique (13) se répétant de manière cyclique et de longueur fixe, un créneau temporel (16, 17) pour transmettre une information utile d'un nombre d'octets fixe au cours du fonctionnement du système de bus déterminable au moins une fois,
**caractérisé en ce que** :
la fenêtre temporelle (13) présente au moins deux sous-fenêtres temporelles communicantes (14, 15), dans lequel le même nombre d'octets est fixé pour tous les créneaux temporels (16, 17) d'une sous-fenêtre temporelle (14, 15) et différents nombres d'octets sont fixés pour les créneaux temporels (16, 17) de diverses sous-fenêtres temporelles (14, 15).

2. Procédé selon la revendication 1,
**caractérisé en ce que** :
l'on utilise deux ou trois sous-fenêtres temporelles (14, 15).

3. Procédé selon la revendication 2,
**caractérisé en ce que** :
l'on fixe une sous-fenêtre temporelle (14, 15) pour les abonnés de communications ayant un grand besoin de communications, en particulier avec un nombre d'octets supérieur à 60 octets, une sous-fenêtre temporelle (14, 15) pour les abonnés de communications ayant un besoin moyen de communications, en particulier avec un nombre d'octets entre 20 et 70 octets et une sous-fenêtre temporelle (14, 15) pour les abonnés de communications ayant un faible besoin de communications, en particulier avec un nombre d'octets inférieur à 24 octets.

4. Procédé selon l'une quelconque des revendications précédentes,
**caractérisé en ce que** :
les nombres d'octets sont fixés à des valeurs de 0 à 254 octets.

5. Procédé selon l'une quelconque des revendications précédentes,
**caractérisé en ce que** :
la fenêtre temporelle statique (13) fait partie d'un cycle de communications (12) qui comprend la fenêtre temporelle statique (13) et une fenêtre temporelle dynamique (23), dans lequel la grandeur des créneaux temporels individuels au cours du fonctionnement du système de bus est adaptée au moins en partie de manière dynamique.

6. Procédé selon l'une quelconque des revendications précédentes,
**caractérisé en ce que** :
chaque créneau temporel (16, 17) comprend une section temporelle non utilisable pour des données utiles, dans lequel la section temporelle est utilisée en particulier par une en-tête (19) et/ou par une queue (20) et/ou par un temps d'inactivité de canal (21) et un délimiteur d'inactivité de canal (22).

7. Véhicule automobile (1) comprenant un système de bus avec plusieurs abonnés de communications conçu pour réaliser un procédé selon l'une quelconque des revendications précédentes.
